# NEUE EUROPÄISCHE PATENTSCHRIFT

(11) **EP 0 633 985 B2**
(45) Veröffentlichungstag und Bekanntmachung des Hinweises auf die Entscheidung über den Einspruch: **10.11.1999**
(45) Hinweis auf die Patenterteilung: 27.03.1996
(21) Anmeldenummer: 93903895.6
(22) Anmeldetag: 30.01.1993
(51) Int. Cl.: F16C 29/06

(54) **WÄLZLAGER FÜR EINE GERADLINIGE BEWEGUNG**
ROLLER BEARING FOR STRAIGHT-LINE MOVEMENT
ROULEMENT POUR MOUVEMENT RECTILIGNE

(30) Priorität: 28.03.1992 DE 4210299
(43) Veröffentlichungstag der Anmeldung: 18.01.1995
(73) Patentinhaber: INA Wälzlager Schaeffler KG, 91063 Herzogenaurach (DE)
(72) Erfinder: HOLWEG, Friedrich, D-8501 Heroldsberg (DE)
(86) Internationale Anmeldenummer: EP9300219
(87) Internationale Veröffentlichungsnummer: WO9320363

(56) Entgegenhaltungen:
- DE-A- 3 015 430
- DE-A- 3 805 392
- DE-A- 4 041 269
- US-A- 4 730 945
- US-A- 4 743 124

## Beschreibung

Die Erfindung betrifft ein Wälzlager für eine geradlinige Bewegung eines Tragkörpers entlang einer Führungsschiene, bestehend aus Paaren von umlaufenden Wälzkörpern, die sich an Laufbahnen des Tragkörpers und der Führungsschiene abstützen, wobei der Tragkörper an seinen beiden Stirnseiten je ein Kopfstück mit die Wälzkörper umlenkenden Bereichen aufweist und wenigstens ein Kopfstück mit einem Kanal zur Zuführung von Schmierstoff zu den Wälzkörpern versehen ist.

Ein derartiges Wälzlager ist aus der EP-B-01 20 093 vorbekannt.

Diese zeigt ebenfalls ein Wälzlager für eine geradlinige Bewegung, bestehend aus einem Tragkörper, welcher auf einer Schiene längsverschieblich über vier Paare von umlaufenden Wälzkörperreihen angeordnet ist. Die Stirnseiten des gattungsbildenden Wälzlagers sind durch je ein Kopfstück verschlossen. In wenigstens einem dieser Kopfstücke ist ein Kanal zur Zuführung von Schmierstoff zu einer Reihe der Wälzkörper vorgesehen Dieser Kanal ist über eine Zusteuerleitung und einen Schmiernippel mit Schmierstoff beaufschlagt.

Von Nachteil bei dem hier aufgezeigten Wälzlager ist es, daß der Kanal zur Zuführung von Schmierstoff in dem Kopfstück keine ventilartigen Verschlüsse oder Öffnungen an seinen Austrittsöffnungen aufweist und außerdem durch Unebenheiten des Kopfstückes nicht vollstandig dichtend an dem Tragkörper anliegen kann. wodurch mit unerwünschten Schmierstoffverlusten zu rechnen ist Diese Schmierstoffverluste führen zu erhöhten Mindestnachschmiermengen an der Wälzlagerung und können im ungünstigsten Fall dazu führen, daß der gewünschte Schmierstoffilm abreißt und so mit erhöhtem Verschleiß und vorzeitigem Funktionsverlust der obengenannten Wälzlagerung zu rechnen ist.

Desweiteren kann durch die aufgezeigte Anordnung und Ausbildung der Schmierstoff kanäle keine gleichmäßige und sichere Versorgung der gewünschten Schmierstellen der Wälzlagerung bei den verschiedenen Einbaulagen garantiert werden, d h., ein Mangel an Schmierstoff ist zuerst an solchen Abschnitten der Schmierstoffkanäle zu erwarten, die entweder von einem zentralen Kanal zur Zuführung von Schmierstoff am weitesten entfernt sind bzw. in einem zur Richtung der Schwerkraft entgegengesetzt angeordneten Bereich ausgebildet sind.

Der Erfindung liegt daher die Aufgabe zugrunde, ein Wälzlager der eingangs beschriebenen Art zu schaffen, bei dem die aufgezeigten Nachteile beseitigt sind und bei dem insbesondere nur minimale Nachschmiermengen unabhängig von der Einbaulage des Wälzlagers zur gleichmäßigen und sicheren Schmierstoffversorgung der Wälzkörper erforderlich sind.

Erfindungsgemäß wird diese Aufgabe nach dem Kennzeichnungsteil des Anspruches 1 dadurch gelöst, daß in den Kanal des Kopfstückes eine einzige separate Schmierstoffleitung mit ventilartig ausgebildeten radialen Öffnungen zum Austritt des Schmierstoffes eingelegt ist.

Durch diese separate Schmierstoffleitung ist das Kopfstück am Tragkörper gegen austretenden Schmierstoff abgedichtet Die erforderliche Nachschmiermenge kann durch die ventilartig ausgebildeten Öffnungen erheblich reduziert werden, da nur Schmierstoff unter Druck durch die Öffnungen gefördert wird und somit ein Abfließen des Schmierstoffes unter Einwirkung der Schwerkraft verhindert wird. Desweiteren ist diese erfindungsgemäße Zuführung von Schmierstoff unabhängig von der Einbaulage der Wälzlagerung, selbst wenn als Schmierstoff niedrigviskoses Öl verwendet wird.

Weitere erfindungsgemäße Ausgestaltungen sind Gegenstand der Unteransprüche 2 bis 10 und werden im folgenden näher beschrieben.

Aus Anspruch 2 geht hervor daß die Schmierstoffleitung einen im wesentlichen U-förmigen Querschnitt aufweist und mit ihrer eine Öffnung bildenden Längsseite über Kontaktflächen am Tragkörper anliegt.

Eine Herstellung einer derartigen U-förmigen Schmierstoffleitung ist fertigungstechnisch einfach zu bewältigen, wobei auch die Montage mit einem betreffenden Kopfstück keine Probleme bereitet.

Gemäß Anspruch 3 ist es vorgesehen, daß die Schmierstoffleitung aus einem elastischen und/oder polymeren Werkstoff gebildet ist.

Diese Werkstoffe sind leicht verfügbar, wobei auch deren Formgebung relativ leicht realisierbar ist.

Wie in Anspruch 4 beschrieben. ist es ebenfalls vorteilhaft, die Schmierstoffleitung aus einem Leichtbauwerkstoff auszubilden.

Durch diesen Werkstoff. wobei auch die vorherig genannten mit eingeschlossen sein konnen, ist die Gesamtmasse des erfindungsgemäßen Wälzlagers nur minimal erhöht.

Nach Anspruch 5 ist es vorgesehen. daß die am Tragkörper anliegenden Kontaktflächen der Schmierstoffleitung als doppeltelastische Dichtlippen ausgebildet sind, die für die Bereiche von gewünschten Austrittsstellen für den Schmierstoff in einlippige elastische Dichtlippen übergehen.

Diese Ausbildung stellt eine vorteilhafte Ausgestaltung der in Anspruch 1 aufgezeigten Lösung dar. Durch die aufgeführten doppeltelastischen Dichtlippen wird eine hervorragende Abdichtung mit dem Kopfstück am Tragkörper mit einfachen Mitteln gesichert.

Die Elastizität der einlippigen Abschnitte der Dichtlippe ist dabei so gewählt, daß die Dichtlippe bei entstehendem Bedarf an Schmiermittel auf der Seite der Wälzkörper einen ausreichenden Öffnungsquerschnitt für den erforderlichen Übertritt von Schmierstoff freigibt und bei gleichen Druckverhältnissen auf der Seite der Schmierstoffleitung und der Seite der Wälzkörper in ihrer Mittelstellung verharrt, also geschlossen bleibt und somit ein unerwünschtes Nachfließen von Schmierstoff verhindert.

Zweckmäßig ist es, wie in Anspruch 6 beschrieben, daß die Bereiche von Austrittsstellen der Schmierstoffleitung jeweils in einem Laufbahnbereich des Trägerkörpers angeordnet sind.

Diese Ausbildung garantiert in Verbindung mit den vorher genannten Maßnahmen einen minimalen Verbrauch an Schmierstoff, d. h., der Schmierstoff wird nur an den Ort zugeführt, wo er benötigt wird.

Gemäß Anspruch 7 ist es vorgesehen, daß die radialen Öffnungen der Schmierstoffleitung als Schlitze ausgebildet sind, welche sich jeweils in einem Laufbahnbereich des Tragkörpers befinden.

Durch diese einfach zu fertigenden Schlitze ist ebenfalls eine gezielte Schmierstoffversorgung möglich. Die Dichtlippen dieser Schlitze öffnen erst dann, wenn in dem Schmierstoffkanal ein genügender Überdruck aufgebaut ist und halten bei annäherndem Druckgleichgewicht die Schmierstoffleitung geschlossen. Denkbar ist diese Variante auch in Kombination mit der in Anspruch 5 vorgeschlagenen Lösung.

Nach Anspruch 8 weist die Schmierstoffleitung einen im wesentlichen ringförmigen Querschnitt auf.

Bei dieser Variante der Ausgestaltung entfallen die vorgenannten Maßnahmen der Abdichtung. Denkbar ist, einen handelsüblichen und leicht verfügbaren Schlauch zu verwenden.

Der Anspruch 9 beschreibt, daß die Schmierstoffleitung mit schräg zu ihrer Axiallinie angeordneten Schlitzen versehen ist, welche sich in Laufbahnbereichen des Tragkörpers befinden.

Diese Schlitze garantieren eine gezielte und sparsame Versorgung der gewünschten Schmierstellen mit Schmierstoff, ähnlich den vorgenannten Maßnahmen, und sind ohne größeren Fertigungsaufwand auch nachträglich in die Schmierstoffleitung einzuschneiden.

Zweckmäßig ist es, wie in Anspruch 10 beschrieben, daß die Schmierstoffleitung an ihren beiden Enden verschlossen ist. Durch diese einfache Maßnahme entfallen zusätzliche und aufwendige Maßnahmen zur Abdichtung am jeweiligen Tragkörper und Kopfstück.

Ein Ausführungsbeispiel der Erfindung ist in der Zeichnung dargestellt und wird im folgenden näher erläutert. Es zeigen:
- Figur 1: eine Draufsicht auf ein erfindungsgemäßes Wälzlager;
- Figur 2: eine Schnittansicht nach der Linie II-II der Figur 1;
- Figur 3: eine Ansicht einer Schmierstoffleitung mit doppeltelastischer Dichtlippe;
- Figur 4: eine Schnittansicht nach der Line IV-IV der Figur 3,
- Figur 5: eine Ansicht einer Schmierstoffleitung mit ringförmigem Querschnitt und
- Figur 6: eine Schnittansicht nach der Linie VI-VI der Figur 5.

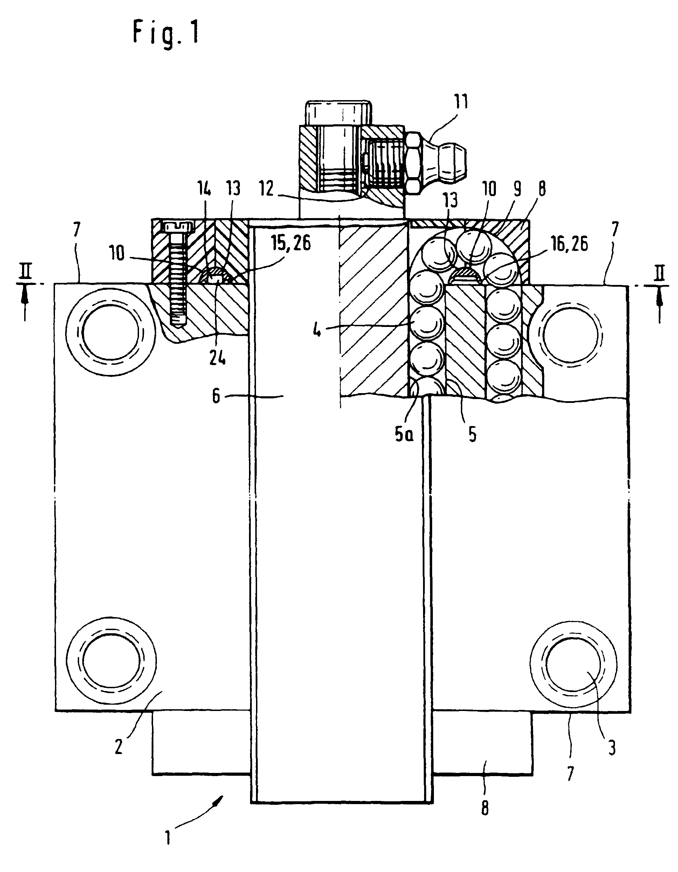

**Figur 1** zeigt eine Draufsicht auf ein erfindungsgemäßes Wälzlager 1. Dieses besteht aus einem Tragkörper 2. Auf diesem Tragkörper 2 können über Schraubverbindungen 3 weitere, nicht dargestellte, linear zu bewegende Bauteile angeordnet werden. Der obengenannte Tragkörper 2 wird über Paare von umlaufenden Wälzkörpern 4, die sich an Laufbahnen 5, 5a des Tragkörpers 2 und einer Führungsschiene 6 abstützen, längsverschieblich gelagert.

Der Tragkörper 2 ist an seiner Stirnseite 7 durch je ein Kopfstück 8, in diesem Fall aus Kunststoff bestehend, verschlossen. Das Kopfstück 8 verfügt über die Wälzkörper 4 umlenkende Bereiche 9. Wenigstens ein Kopfstück 8 ist mit einem Kanal 10 zur Zuführung von Schmierstoff über einen Schmiernippel 11 und eine Zusteuerleitung 12 zu den Wälzkörpern 4 versehen.

In dem Kanal 10 wenigstens eines Kopfstückes 8 ist eine separate Schmierstoffleitung 13 eingelegt. Bei der hier gezeigten Variante weist die Schmierstoffleitung 13 einen U-förmigen Querschnitt auf, und liegt mit ihrer eine radiale Öffnung 14 bildenden Längsseite über doppeltelastische Dichtlippen 15 an der Stirnseite 7 des Tragkörpers 2 an. In einem Bereich von gewünschten Austrittsstellen für den Schmierstoff, nämlich im Bereich der Laufbahnen 5, 5a für die Wälzkörper 4, ist die Schmierstoffleitung 13 als einlippige Dichtlippe 16 ausgebildet.

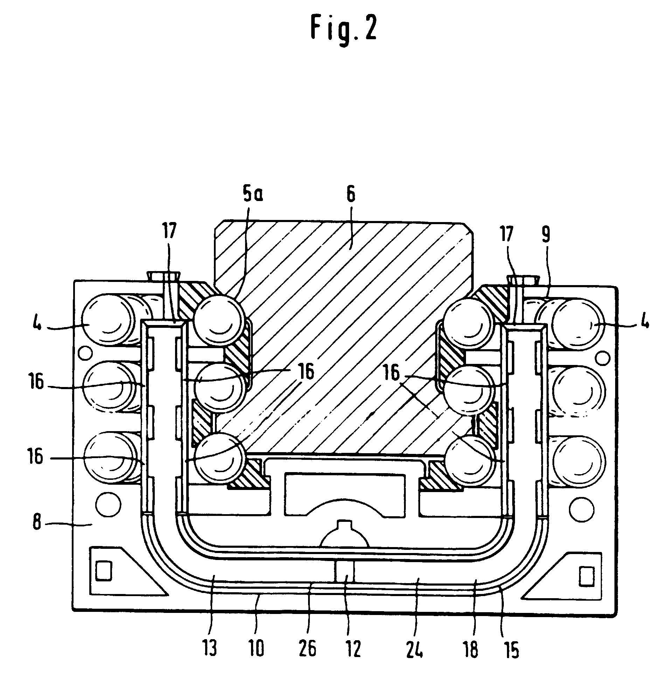

Anhand der **Figur 2**, aus der eine Schnittansicht nach der Line II-II der Figur 1 hervorgeht, wird die Wirkungsweise des Wälzlagers 1 mit der erfindungsgemäßen Schmierstoffleitung 13 näher erläutert.

Zu erkennen ist, daß die Schmierstoffleitung 13 an ihren axialen Enden 17 verschlossen ausgebildet ist.

Über einen Schmiernippel 11 (siehe Figur 1) und eine Zusteuerleitung 12 wird Schmierstoff in die Schmierstoffleitung 13 gedrückt. Dieser Schmierstoff verteilt sich in einem Hohlraum 18, der bei weiterer Zugabe von Schmierstoff einen Überdruck in der Schmierstoffleitung 13 aufbaut Dieser Überdruck bewirkt ein Nachgeben der einlippigen Dichtlippe 16 aufgrund ihrer Elastizität. Der Schmierstoff kann nun an den Bereichen von gewünschten Austrittsstellen für Schmierstoff in der Nähe der Wälzkörper 4 austreten, bis der Überdruck so weit vermindert ist, daß die einlippige Dichtlippe 16 wieder geschlossen ist, d. h., der Druck von Schmierstoff in der Schmierstoffleitung 13 ist ähnlich dem Druck von Schmierstoff auf der Seite der Wälzkörper 4.

Da das Wälzlager 1 allseitig abgedichtet ist, verbleibt der Schmierstoff in der Schmierstoffleitung 13, bis ein nächster Schmierimpuls wieder für eine Druckerhöhung in der Schmierstoffleitung 13 sorgt und der Vorgang sich wiederholt.

Dies bedeutet auch, daß nur an die Stellen Schmierstoff befördert wird, an denen ein Bedarf an Schmierstoff besteht, also an solche Stellen, an denen der Druck an Schmierstoff auf der Seite der Wälzkörper 4 kleiner ist als in der Schmierstoffleitung 13. Somit ist der Verbrauch an Schmierstoff durch das Wälzlager 1 stark minimiert.

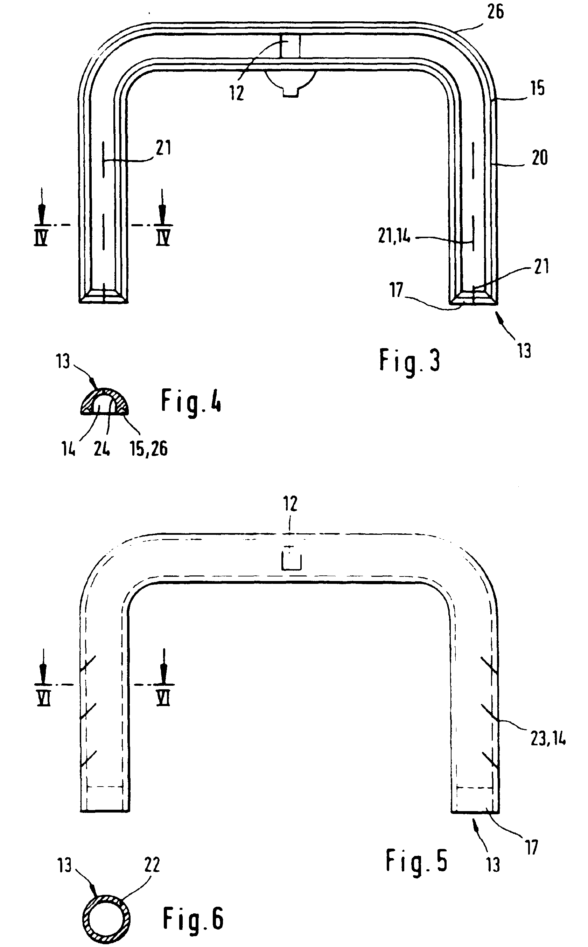

Die **Figur 3** zeigt eine Ansicht einer Schmierstoffleitung 13 mit doppeltelastischer Dichtlippe 15. Der Aufbau dieser ist ähnlich der in den Figuren 1 und 2 beschriebenen. Jedoch läuft die dopppeltelastische Dichtlippe 15 vollkommen an der Längsseite 20 der Schmierstoffleitung 13 um. Zur gezielten Zufuhr von Schmierstoff auf die Laufbahnen 5, 5a des Wälzlagers 1 (siehe Figuren 1 und 2) dienen in diesem Fall Schlitze 21.

Aus **Figur 4** ist eine Schnittansicht nach der Linie IV-IV der Figur 3 entnehmbar. Zu erkennen ist, daß die Schmierstoffleitung 13 aus einem Kunststoff gebildet ist.

Gemäß den **Figuren 5 und 6** ist es auch vorgesehen, die Schmierstoffleitung 13 mit einem ringförmigen Querschnitt 22 zu versehen. Vorteilhaft ist es, diese erfindungsgemäße Schmierstoffleitung 13 mit schräg zur Axiallinie der Schmierstoffleitung 13 angeordneten Schlitzen 23 auszubilden. Diese Schlitze 23 sind wiederum in dem Bereich der Laufbahnen 5, 5a der Wälzkörper 4 angeordnet.

### Bezugszahlenliste

- 1: Wälzlager
- 2: Tragkörper
- 3: Schraubverbindung
- 4: Wälzkörper
- 5: Laufbahnen
- 5a: Laufbahnen
- 6: Führungsschiene
- 7: Stirnseite
- 8: Kopfstück
- 9: Bereich
- 10: Kanal
- 11: Schmiemippel
- 12: Zusteuerleitung
- 13: Schmierstoffleitung
- 14: Öffnung
- 15: Dichtlippe
- 16: Dichtlippe
- 17: Enden
- 18: Hohlraum
- 19: nicht vergeben
- 20: Längsseite
- 21: Schlitze
- 22: Querschnitt
- 23: Schlitze
- 24: Querschnitt
- 25: nicht vergeben
- 26: Kontaktfläche

## Patentansprüche

1. Wälzlager (1), für eine insbesondere geradlinige Bewegung eines Tragkörpers (2) entlang einer Führungsschiene (6), bestehend aus Paaren von umlaufenden Wälzkörpem (4), die sich an Laufbahnen (5, 5a) des Tragkörpers (2) und der Führungsschiene (6) abstützen, wobei der Tragkörper (2) an seinen beiden Stirnseiten (7) je ein Kopfstück (8), mit die Wälzkörper (4) umlenkenden Bereichen (9) aufweist und wenigstens ein Kopfstück (8) mit einem Kanal (10) zur Zuführung von Schmierstoff zu den Wälzkörpern (4) versehen ist, **dadurch gekennzeichnet**, daß in den Kanal (10) des Kopfstückes (8) eine einzige separate Schmierstoffleitung (13) mit ventilartig ausgebildeten radialen Offnungen (16, 21, 23) zum Austritt des Schmierstoffes eingelegt ist.

2. Wälzlager nach Anspruch 1, **dadurch gekennzeichnet**, daß die Schmierstoffleitung (13) einen im wesentlichen U-förmigen Querschnitt (24) aufweist und mit ihrer eine Öffnung (14) bildenden Längsseite über Kontaktflächen (26) am Tragkörper (2) anliegt.

3. Wälzlager nach Anspruch 1, **dadurch gekennzeichnet**, daß die Schmierstoffleitung (13) aus einem elastischen und/oder polymeren Werkstoff gebildet ist

4. Wälzlager nach Anspruch 1 oder 2, **dadurch gekennzeichnet**, daß die Schmierstoffleitung (13) aus einem Leichtbauwerkstoff gebildet ist.

5. Wälzlager nach Anspruch 1, **dadurch gekennzeichnet**, daß die am Tragkörper (2) anliegenden Kontaktflächen (26) der Schmierstoffleitung (13) als doppeltelastische Dichtlippen (15) ausgebildet sind. die für die Bereiche von gewünschten Austrittsstellen für Schmierstoff in einlippige elastische Dichtlippen (16) übergehen.

6. Wälzlager nach Anspruch 5, **dadurch gekennzeichnet**, daß die Bereiche von Austrittsstellen der Schmierstoffleitung (13) jeweils in einem Laufbahnbereich (5) des Tragkörpers (2) angeordnet sind

7. Wälzlager nach Anspruch 1, **dadurch gekennzeichnet**, daß die radialen Öffnungen (14) der Schmierstoffleitung (13) als Schlitze (21) ausgebildet sind, welche sich jeweils in einem Laufbahnbereich (5) des Tragkörpers (2) befinden

8. Wälzlagerung nach Anspruch 1, **dadurch gekennzeichnet**, daß die Schmierstoffleitung (13) einen im wesentlichen ringförmigen Querschnitt (22) aufweist.

9. Wälzlagerung nach Anspruch 8, **dadurch gekennzeichnet**, daß die Schmierstoffleitung (13) mit schräg zu ihrer Axiallinie angeordneten Schlitzen (23) versehen ist, welche sich in Laufbahnbereichen (5) des Tragkörpers (2) befinden.

10. Wälzlagerung nach Anspruch 1 oder 8, **dadurch gekennzeichnet**, daß die Schmierstoffleitung (13) an ihren beiden Enden (17) verschlossen ist.

## Claims

1. Rolling bearing (1), for a, in particular, linear movement of a carrier (2) along a guide rail (6), said rolling bearing comprising pairs of rolling element circuits supported on raceways (5, 5a) on the carrierr (2) and the guide rail (6), a head piece (8) comprising a region (9) for deflecting the rolling elements (4) being arranged at each of the two front ends (7) of the carrier (2), and at least one of said head pieces (8) comprising a canal (10) for feeding lubricant to the rolling elements (4), **characterized in that** one single separate lubricant duct (13) comprising valve-like radial openings (16, 21, 23) for lubricant exit is inserted into the canal (10) of the head piece (8).

2. Rolling bearing according to claim 1, **characterized in that** the lubricant duct (13) has a substantially U-shaped cross-section (24) and its side wall which forms an opening (14) bears against the carrier (2) via contact surfaces (26).

3. Rolling bearing according to claim 1, **characterized in that** the lubricant duct (13) is made of an elastic and/or polymeric material.

4. Rolling bearing according to claim 1 or 2, characterized in that the lubricant duct (13) is made of a light-weight material.

5. Rolling bearing according to claim 1, **characterized in that** the contact surfaces (26) of the lubricant duct (13) which bear against the carrier (2) are configured as double elastic sealing lips (15) which, in the regions of intended lubricant exit merge with single elastic sealing lips (16).

6. Rolling bearing according to claim 5, **characterized in that** each of the lubricant exit regions of the lubricant duct (13) is arranged in a region of the raceway (5) of the carrier (2).

7. Rolling bearing according to claim 1, **characterized in that** the radial openings (14) of the lubricant duct (13) are made in the form of slits (21) situated each one in a region of the raceway (5) of the carrier (2).

8. Rolling bearing according to claim 1, **characterized in that** the lubricant duct has a substantially annular cross-section (22).

9. Rolling bearing according to claim 8, **characterized in that** the lubricant duct (13) comprises slits (23) which extend at a slant to its centre line and are situated in raceway regions (5) of the carrier (2).

10. Rolling bearing according to claim 1 or 8, **characterized in that** the lubricant duct (13) is sealed at both its ends (17).

## Revendications

1. Palier à roulement (1), pour un mouvement, en particulier linéaire, d'un corps de support (2) le long d'un rail de guidage (6), ledit palier à roulement (1) comprenant des paires de circuits de corps roulants (4) supportés sur des pistes de roulement (5, 5a) du corps de support (2) et du rail de guidage (6), une pièce de tête (8) comprenant des régions de renvoi (9) des corps roulants (4) étant agencée sur chaque côté frontal (7) du corps de support (2), et au moins une de ces pièces de tête (8) comprenant un canal (10) pour l'alimentation des corps roulants (4) en lubrifiant, **caractérisé en ce qu'**un seul conduit séparé de lubrifiant (13) comprenant des ouvertures radiales (16, 21, 23) à effet de soupape pour la sortie du lubrifiant est inséré dans le canal (10) de la pièce de tête (8).

2. Palier à roulement selon la revendication 1, **caractérisé en ce que** le conduit de lubrifiant (13) a une section droite (24) globalement en forme d'U et son côté longitudinal qui forme une ouverture (14), s'appuie par des surfaces de contact (26) contre le corps de support (2).

3. Palier à roulement selon la revendication 1, **caractérisé en ce que** le conduit de lubrifiant (13) est fait en une matière élastique et/ou polymérique.

4. Palier à roulement selon la revendication 1 ou 2, **caractérisé en ce que** le conduit de lubrifiant (13) est fait en une matière légère.

5. Palier à roulement selon la revendication 1, **caractérisé en ce que** les surfaces de contact (26) du conduit de lubrifiant (13) qui s'appuient contre le corps de support (2) sont configurées sous la forme de lèvres élastiques doubles d'étanchéité (15) qui, dans les régions d'endroits souhaités de sortie du lubrifiant, se raccordent à des lèvres élastiques uniques d'étanchéité (16).

6. Palier à roulement selon la revendication 5, **caractérisé en ce que** les régions d'endroits de sortie dans le conduit de lubrifiant (13) sont agencées, chacune, dans une région de la piste de roulement (5) du corps de support (2).

7. Palier à roulement selon la revendication 1, **caractérisé en ce que** les ouvertures radiales (14) du conduit de lubrifiant (13) sont configurées sous la forme de fentes (21) situées, chacune, dans une région de la piste de roulement (5) du corps de support (2).

8. Palier à roulement selon la revendication 1, **caractérisé en ce que** le conduit de lubrifiant (13) a une section droite (22) de forme globalement annulaire.

9. Palier à roulement selon la revendication 8, **caractérisé en ce que** le conduit de lubrifiant (13) comprend des fentes (23) qui sont inclinées par rapport à sa ligne centrale en étant agencées dans des régions de la piste de roulement (5) du corps de support (2).

10. Palier à roulement selon la revendication 1 ou 8, **caractérisé en ce que** le conduit de lubrifiant (13) est obturé à ses deux extrémités (17).
